# EUROPEAN PATENT APPLICATION

(11) **EP 4 840 750 A1**
(43) Date of publication of application: **18.11.2026**
(21) Application number: 25176436.1
(22) Date of filing: 14.05.2025
(51) Int. Cl.: B63H 5/10, B63H 5/125, B63H 23/32

(54) **AZIMUTHING PROPULSION UNIT WITH BEARING UNIT AND METHOD FOR ELECTRICALLY ISOLATING ELEMENTS IN AN AZIMUTHING PROPULSION UNIT**

(71) Applicant: ABB Oy, 00380 Helsinki (FI)
(72) Inventor: KEKKI, Tuomas, 00980 Helsinki (FI); PELLINEN, Petri, 00980 Helsinki (FI); SAKKINEN, Petri, 00980 Helsinki (FI); KATAINEN, Mikko, 00980 Helsinki (FI); PELJO, Veli-Pekka, 00980 Helsinki (FI)
(74) Representative: Zimmermann & Partner Patentanwälte mbB

(57) **Abstract**

An azimuthing propulsion unit (1000) is provided including a shaft arrangement with at least one shaft (47; 48), an insulating bearing unit (40-1; 40-2) for the at least one shaft, optionally a bearing housing (407) for housing the insulating bearing unit, a motor (1; 1-1) for driving the at least one shaft, a marine propeller unit driven by the at least one shaft, and a pod (30) with a hull for housing the motor. The shaft arrangement includes a first shaft (48) and, optionally, a second shaft (47). The insulating bearing unit includes at least one bearing (402- 406) for the at least one shaft and provides an electrical separation between at least two elements of the following: the first shaft of the shaft arrangement, the second shaft of the shaft arrangement, the hull, and the bearing housing. Further, a method for electrically separating elements of an azimuthing propulsion unit is provided.

## Description

### TECHNICAL FIELD

Embodiments of the present disclosure relate to an azimuthing propulsion unit, especially to a bearing unit for one or more shafts of an azimuthing propulsion unit. Further embodiments relate to a method for electrically insulating elements in an azimuthing propulsion unit, especially to a method for electrically insulating elements of a shaft arrangement in an azimuthing propulsion unit.

### BACKGROUND

Azimuthing propulsion units provide an efficient way to propel marine vessels. Further, azimuthing propulsion units allow for an improved maneuverability of marine vessels. In azimuthing propulsion units, at least one marine propeller attached to a rotatable pod provides thrust. A direction of the thrust may be controlled via a rotation of the rotatable pod. In typical azimuthing propulsion units, at least one electric motor driving the at least one marine propeller via a shaft arrangement is integrated in the pod. The pod has a pod hull for encompassing at least a part of the elements of an azimuthing propulsion unit, e.g. the motor, a shaft arrangement, and the corresponding elements like bearings, seals and the like.

Due to the rotating parts and the (often) electric motor within the pod, electrical insulation between different elements of the azimuthing propulsion unit is used. For instance, in an azimuthing propulsion unit having a shaft arrangement with a single shaft within the pod hull, electric insulation between the shaft and the hull is used.

In an azimuthing propulsion unit, there is typically few space within the pod, e.g. due to the requirement of an streamlined pod driving in the sea. At the same time, an easier maintenance and replacement of elements arranged within the pod is desired, as well as a good function and low error rate of the elements within the pod help reducing the need of repair and replacement. In particular, repair and replacement of the azimuthing propulsion unit often have to be performed on a dry dock coming with high costs and loss of operation time of the complete ship.

Azimuthing propulsion units that provide a high efficiency, durability and maintainability, in particular in view of the restricted amount of space available in the pod, are desired. In particular, for reducing errors and repair time, a reliable insulation is helpful. It is therefore desirable to provide an insulation scheme for the azimuthing propulsion unit considering the small space within the pod, and enabling easy maintenance, repair and replacement of elements in the azimuthing propulsion unit.

### DISCLOSURE OF THE INVENTION

In the view of the foregoing, the present disclosure is directed to a bearing unit for an azimuthing propulsion unit, an azimuthing propulsion unit comprising a bearing unit and a method of supporting an inner shaft and an outer shaft in an azimuthing propulsion unit for an azimuthing propulsion unit.

According to an aspect of the present disclosure, an azimuthing propulsion unit is provided including a shaft arrangement with at least one shaft, an insulating bearing unit for supporting the at least one shaft at least partially, optionally a bearing housing for housing the insulating bearing unit, a motor for driving the at least one shaft, a marine propeller unit comprising at least one propeller driven by the at least one shaft, a pod for housing the motor and at least a part of the shaft arrangement, a hull of the pod. The shaft arrangement includes a first shaft and, optionally, a second shaft. The insulating bearing unit includes at least one bearing for the at least one shaft; wherein the insulating bearing unit provides an electrical separation between at least two elements of the following: the first shaft of the shaft arrangement, the second shaft of the shaft arrangement, the pod hull, and the bearing housing.

According to some embodiments described herein, especially in a single shaft system, electric insulation between the shaft and the hull is used for preventing circulating currents. In embodiments, where a contra-rotating propeller (CRP) system is provided, insulation is used between the two shafts, as well as between the shafts and the pod hull or the bearing housing for preventing circulating currents. With the azimuthing propulsion unit according to embodiments described herein, an insulation between the shaft and other parts (e.g. the bearing housing, the hull, or insulation between a first shaft and a second shaft) of the azimuthing propulsion unit is possible in a space saving arrangement. Furthermore, the bearing unit according to embodiments described herein offers an insulation between a shaft and other parts of the azimuthing propulsion unit, which is easy to assemble and facilitates maintenance, repair and exchange of the insulation.

According to embodiments described herein, a circulating current may be understood as a current between two objects, or between two remote located areas of one object, wherein the circulating current flows due to a potential difference. Typically, the circulating current(s) are to be prevented for avoiding damage on the objects, or even the complete system, in which the objects are located, due to uncontrolled flowing currents.

According to some embodiments, an azimuthing propulsion unit is configured to propel a marine vessel. In particular, the marine vessel may comprise at least one azimuthing propulsion unit according to embodiments described herein. The marine vessel as described herein comprises seagoing or inland marine vessels. In particular, the marine vessel comprises ships and boats. In some embodiments, the marine vessel comprises merchant ships, in particular for transporting goods. In particular, the marine vessel may comprise a container vessel, a Ro-Ro or car carrier, a tanker or shuttle tanker, a liquid natural gas (LNG) carrier or a floating storage and regasification unit. In some embodiments, the marine vessel comprises ferries, in particular single- and double-ended ferries, cruise ships, water buses, yachts. In some embodiments, the marine vessel comprises offshore energy vessels, in particular service operation vessels (SOVs), cable laying vessels (CLVs), foundation installation vessels (FIVs), offshore construction (OCVs) and support vessels (OSVs), platform supply vessels (PSVs), and anchor-handling tug supply vessels (AHTS). In some embodiments, the marine vessel comprises research and survey vessels or other special purpose vessels, such as dredgers, heavy lift vessels or towboats. In some embodiments, the marine vessel comprises ice-going marine vessels, in particular icebreakers. In some embodiments, the marine vessel may comprise navy or coast guard vessels.

The marine vessel typically comprises a hull. The pod of the azimuthing propulsion unit is attached to the hull of the marine vessel, in particular at the bottom of the hull. Typically, the hull defines a vessel interior and a vessel exterior. Space confined by the hull and configured to be isolated from sea water may be defined as the vessel interior. Space outside the hull, and in particular the sea, may be defined as the vessel exterior. Typically, the vessel interior is substantially free of sea water and substantially dry.

In some embodiments, the marine vessel may comprise a plurality of azimuthing propulsion units. In particular, the marine vessel may comprise 2, 3, 4, or more azimuthing propulsion units. Typically, each of the plurality of azimuthing propulsion units may be controlled separately. In some embodiments, the marine vessel may comprise a single azimuthing propulsion unit with a single pod. In some embodiments, at least one azimuthing propulsion unit may be combined with one or more further marine propulsion unit on a single marine vessel.

Typically, the azimuthing propulsion unit comprises a pod with a pod hull. The pod is configured to be rotatably attached to the hull of the marine vessel, particularly at the bottom of the hull of the marine vessel. The pod may be rotated about a substantially vertical rotation axis of the azimuthing propulsion unit. In particular, the pod may be rotated by at least 270°, at least 315° or at least 360° about the substantially vertical rotation axis of the azimuthing propulsion unit. In typical embodiments, the rotation of the pod about the substantially vertical rotation axis of the azimuthing propulsion unit is not restricted, in particular not mechanically restricted.

Typically, the pod comprises a hull cap at a first end of the pod and a propeller unit, in particular a pushing or pulling propeller unit, attached to a second end of the pod. The first end of the pod may also be described as non-driving end, NDE, and the second end of the pod may also be described as driving end, DE, of the pod. The propeller unit typically rotates about a rotation axis of the propeller unit. The rotation axis of the propeller unit may be substantially perpendicular to the vertical rotation axis of the azimuthing propulsion unit.

According to some embodiments, the propeller unit may comprise a single shaft propeller. In some embodiments, the propeller unit comprises an inner shaft propeller (or first shaft propeller) and an outer shaft propeller (or a second shaft propeller). Typically, the outer shaft propeller is arranged closer to the hull than the inner shaft propeller. In a pushing propeller unit, the outer shaft propeller may also be described as front propeller and the inner shaft propeller may be described as the rear propeller; and vice versa for a pulling propeller unit. In particular, the outer shaft propeller is arranged closer to the vertical rotation axis than the inner shaft propeller. Typically, the outer shaft propeller and the inner shaft propeller are arranged adjacent to each other. The outer shaft propeller and the inner shaft propeller rotate about the rotation axis of the propeller unit.

Typically, in the case that the propeller unit comprises an inner shaft propeller and an outer shaft propeller, the propeller unit comprises a contra rotating propeller unit. In particular, the outer shaft propeller may be configured to rotate in a first direction, particularly about the rotation axis of the propeller unit, and the inner shaft propeller may be configured to rotate in a second direction opposite to the first direction, particularly about the rotation axis of the propeller unit. In other words, the outer shaft propeller may rotate clockwise and the inner shaft propeller may rotate counterclockwise, or vice versa, about the same rotation axis. A contra rotating propeller unit may advantageously allow for a higher hydrodynamic efficiency than other propeller concepts, in particular with respect to single propellers.

In some embodiments, the outer shaft propeller has a first diameter and the inner shaft propeller has a second diameter with the second diameter being different from the first diameter, particularly the first diameter being larger than the second diameter. Typically, the outer shaft propeller comprises a first number of first blades and the inner shaft propeller comprises a second number of second blades. Typically, the second number may be different from the first number. The outer shaft propeller may comprise 3, 4, 5, 6 or 8 first blades. The inner shaft propeller may comprise 3, 4, 5, 6 or 8 second blades. In some embodiments, the outer shaft propeller comprises one more first blade than the inner shaft propeller comprises second blades. Exemplarily, the outer shaft propeller comprises 6 first blades and the inner shaft propeller comprises 5 second blades. In some embodiments, the outer shaft propeller and the inner shaft propeller may comprise the same number of blades, in particular 3, 4, 5, 6 or 8 first and second blades, respectively. The outer shaft propeller and/or the inner shaft propeller may each be manufactured as a monoblock or in components, as a built-up propeller.

Typically, the propeller unit is driven by an electric motor. Typically, the electric motor has a power of at least 100 kW, at least 1 MW, at least 2 MW, at least 5 MW, at least 10 MW or at least 15 MW. The electric motor is typically arranged within the pod. Particularly, the electric motor is mechanically connected to the propeller gearlessly. Typically, a rotation axis of the electric motor is identical to a rotation axis of the propeller unit. In particular, an output shaft of the electric motor may be identical to the drive shaft of the propeller unit or may be gearlessly connected to a drive shaft of the propeller unit. The output shaft of the electric motor typically is coaxial to the drive shaft of the propeller unit. In typical embodiments, for a propeller unit comprising an inner shaft propeller (or first shaft propeller) and an outer shaft propeller (or second shaft propeller), in particular for the contra rotating propeller unit, the outer shaft propeller and the inner shaft propeller may be driven by the same electric motor.

According to some embodiments described herein, the electric motor typically comprises a contra rotating electric motor. In particular, the contra rotating electric motor comprises a dual rotor electric motor with an outer rotor and an inner rotor configured to rotate in opposite directions about a rotation axis of the electric motor. Typically, the rotation axis of the electric motor may be coaxially with the rotation axis of the propeller unit. Typically, the electric motor is a synchronous electric motor. Typically, the outer rotor comprises windings to be supplied by an electric current for the operation of the electric motor. The inner rotor may be a permanent magnet rotor or an externally excited synchronous rotor.

In some embodiments, in which the propeller unit includes two propellers, the drive shaft of the propeller comprises a first shaft (or inner shaft) and a second shaft (or outer shaft). The first shaft and the second shaft are typically coaxially arranged. Typically, the outer rotor drives the second shaft (or outer shaft). The outer shaft is typically mechanically connected to the outer shaft propeller gearlessly. Typically, the inner rotor drives the first shaft (or inner shaft). The inner shaft is typically mechanically connected to the inner shaft propeller gearlessly. Typically, the inner shaft is (at least partially) arranged inside the outer shaft; especially, an inside radius of the outer shaft exceeds an outside radius of the inner shaft. The inner shaft and the outer shaft rotate about the same rotation axis, and in particular about the rotation axis of the electric motor. Employing a contra rotating electric motor may advantageously allow to drive the contra rotating propeller with a single electric motor gearlessly. Thereby, a more compact and efficient drive train may be provided. Typically, the inner shaft is supported in the pod by a drive end (DE) inner bearing and a non-drive end (NDE) bearing unit. Typically, the outer shaft is supported in the pod by a drive end (DE) outer bearing and the NDE bearing unit.

According to some embodiments, the azimuthing propulsion unit includes the first shaft (or inner shaft) and the second shaft (or outer shaft), wherein the first shaft runs at least partially within the second shaft. In some embodiments, the first shaft and the second shaft are arranged in a counter-rotating manner, i.e. with counter-rotating rotation directions. Typically, the bearing unit may include a bearing between the first shaft and the second shaft (or between flanges of the respective shafts, as described in detail below with respect to the figures). According to some embodiments described herein, which may be combined with other embodiments described herein, the propeller unit includes a first propeller coupled to (and especially driven by) the first shaft and a second propeller coupled to (and especially driven by) the second shaft. The two propellers being independently driven allow for a very efficient and fast reacting operation of the azimuthing propulsion unit according to embodiments described herein.

Typically, the first shaft and the second shaft are driven by the (same) motor, which may especially be a contra rotating dual rotor electric motor for driving both the first shaft and the second shaft. With this arrangement, an efficient and space saving solution can be offered for increasing the possibilities of the azimuthing propulsion unit. In some embodiments, a contra rotative movement of the shafts may be based on a geared solution, such as for instance a gear and an electrical motor (being a "normal" electric motor in the sense of not being a contra rotating dual rotor electric motor). In some embodiments described herein, the azimuthing propulsion unit has a drive end (DE) at the side of the propeller unit and a non-drive end (NDE) at the side of the motor opposite to the propeller unit, wherein the insulating bearing unit is located at the NDE side.

According to some embodiments, which may be combined with other embodiments described herein, the first shaft (or inner shaft) has a first flange and the second shaft (or outer shaft) has a second flange, wherein the at least one bearing of the insulating bearing unit is located between the first flange and the second flange. The flanges facilitate the assembly and disassembly of the bearing unit according to some embodiments described herein and allow for a reliable support of the shafts by the bearing unit.

In some embodiments, the insulating bearing unit may include a bearing housing having bearing housing walls, the insulating bearing unit further including a first axial bearing between the first shaft and the second shaft, a second axial bearing arranged between a bearing housing wall of the bearing housing and the first shaft, and a third axial bearing arranged between a bearing housing wall and the second shaft. The arrangement of first, second and third axial bearing offers a compact and simple design of the bearing unit, which at the same time has several functions, like support of both the first shaft and the second shaft as well as insulation properties against circulating currents.

Typically, the insulating bearing unit (especially the insulating bearing unit having a first, second and third axial bearing) may be configured for allowing a transfer of axial forces between the first shaft (or the first flange) and the second shaft (or the second flange). In some embodiments, the insulating bearing unit may be configured for allowing a transfer of axial forces between the bearing housing and the at least one shaft (or between the bearing housing and both, the first and second shafts). Thereby, the shafts can be supported relatively to each other. In particular, the axial load of the first shaft and the second shaft can be shared, which may lead to less damage cases. Additionally, or alternatively, the insulating bearing unit may be configured for allowing a transfer of radial forces between the first shaft (or the first flange) and the bearing housing and/or for allowing a transfer or radial forces between the second shaft (or a second flange) and the bearing housing. The transfer of forces being combined with insulating properties allows for a time- and space-saving assembly of the azimuthing propulsion unit, which in turn may lower the costs for assembly, maintenance, and repair of the azimuthing propulsion unit.

In some embodiments, the insulating bearing unit may be configured for enabling an electrical separation (or insulation) between the at least one shaft and the hull of the pod. This may especially be applied in a single-shaft system of an azimuthing propulsion unit. The location of the insulating bearing unit according to embodiments described herein enables a space-saving arrangement of the single elements used in the azimuthing propulsion unit.

Typically, the at least one bearing of the bearing unit may be a slide bearing having electrically isolating properties. Especially, the at least one bearing may include a bearing pad. The slide bearings, and especially the pad bearings, are a cost-efficient, reliable and easy-to assemble possibility to combine the functions of insulation and support for the one or two shafts.

According to some embodiments described herein, the insulating bearing unit may provide an electrical separation (or insulation) by the material of the at least one bearing, the material thickness and/or one or more layers of insulating material on or in the at least one bearing. Typically, the electrical separation (or insulation) may be provided by choosing (and utilizing) one or more layers of insulating material with suitable thickness for achieving an appropriate insulation effect. In this way, a reliable electrical insulation can be realized by the bearing unit.

In some embodiments, the insulating bearing unit may include an insulation material within the at least one bearing; an insulation layer on the surface of the at least one bearing; an insulation layer under the surface of the at least one bearing; the at last one bearing being a sliding bearing and comprises an insulation layer under the surface of the at least one bearing; a first part with a sliding surface and a second part with a thrust pad, wherein the insulation is part of thrust pad; an insulation material in or a layer of insulation material on or within a bearing housing wall; an insulation material in or a layer of insulation material on the first shaft; an insulation material in or a layer of insulation material on the second shaft; a substantially round shaped circumferential insulating ring part in or on the first shaft; and/or a substantially round shaped circumferential insulated (or insulating) ring part in or on the second shaft. These are various possibilities to realize the electrical separation effect of the bearing unit, which enable the combination of support and insulation according to the specific application and the respective conditions.

According to some embodiments, the insulating bearing unit may be configured to insulate the first shaft and the second shaft from each other and to insulate the first shaft and the second shaft from the pod hull to minimize bearing currents running through the bearings of the insulating bearing unit. In this way, the bearing unit is able to provide an insulation for the complete shaft arrangement in the azimuthing propulsion unit.

According to another aspect of the present disclosure, a method for electrically separating elements of an azimuthing propulsion unit. The azimuthing propulsion unit includes a shaft arrangement with at least one shaft, an insulating bearing unit for supporting the at least one shaft at least partially and comprising at least one bearing, optionally a bearing housing for housing the insulating bearing unit, a motor for driving the at least one shaft, a marine propeller unit comprising at least one propeller driven by the at least one shaft, a pod for housing the motor and at least a part of the shaft arrangement, a hull of the pod. The shaft arrangement includes a first shaft and, optionally, a second shaft. The method includes arranging the insulating bearing unit between two elements of the azimuthing propulsion unit; and electrically separating elements of the azimuthing propulsion unit with respect to each other by the insulating bearing unit, the elements are at least two elements of the following: the first shaft, the second shaft, the hull of the pod, and the bearing housing.

In some embodiment, arranging the insulating bearing unit may include arranging the insulating bearing unit between the first shaft and the second shaft, wherein the first shaft runs at least partially within the second shaft, and wherein especially the first shaft and the second shaft are arranged in a counter-rotating manner. By arranging the insulating bearing unit between the first shaft and the second shaft, a space-saving solution for the support of both shafts and the insulation is provided. Additionally, a force transfer can take place between the first shaft and the second shaft via the bearing unit, which also favors a compact and reliable design of the bearing unit of the azimuthing propulsion unit.

Further advantages, features, aspects and details that can be combined with embodiments described herein are evident from the dependent claims, the description and the drawings.

### BRIEF DESCRIPTION OF THE DRAWINGS

The accompanying drawings relate to embodiments of the disclosure and are described in the following:
- FIG 1a: schematically illustrates an azimuthing propulsion unit according to the embodiments described herein;
- FIG 1b: schematically illustrates an azimuthing propulsion unit according to the embodiments described herein;
- FIG 1c: schematically illustrates an azimuthing propulsion unit according to the embodiments described herein;
- FIG 2: schematically illustrates a single shaft arrangement of an azimuthing propulsion unit with an insulating bearing unit according to embodiments described herein;
- FIG. 3: schematically shows an azimuthing propulsion unit with an insulating bearing unit according to some embodiments described herein;
- FIG. 4: schematically shows an NDE side of an azimuthing propulsion unit with an insulating bearing unit according to some embodiments described herein;
- FIG. 5: schematically shows an insulating bearing unit of an azimuthing propulsion unit according to some embodiments described herein;
- FIG. 6: schematically shows an insulating bearing unit of an azimuthing propulsion unit according to some embodiments described herein and the transfer of forces in the insulating bearing unit;
- FIGs. 7a to 7f: schematically show different embodiments for an insulation of the insulating bearing unit of an azimuthing propulsion unit according to some embodiments described herein; and,
- FIG. 8: schematically shows a flow chart of a method for electrically separating elements of an azimuthing propulsion unit according to some embodiments described herein.

### DETAILED DESCRIPTION OF EMBODIMENTS

Reference will now be made in detail to the various embodiments of the disclosure, one or more examples of which are illustrated in the figures. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield a further embodiment. It is intended that the description includes such modifications and variations. In the figures, elements may be depicted with exaggerated dimensions to improve the comprehensibility of the detailed description of embodiments. In particular, relations of lengths and widths of components shown may be distorted. Further, some elements may be depicted with enlarged dimensions while other elements in the same figure are depicted, relatively, with reduced dimensions.

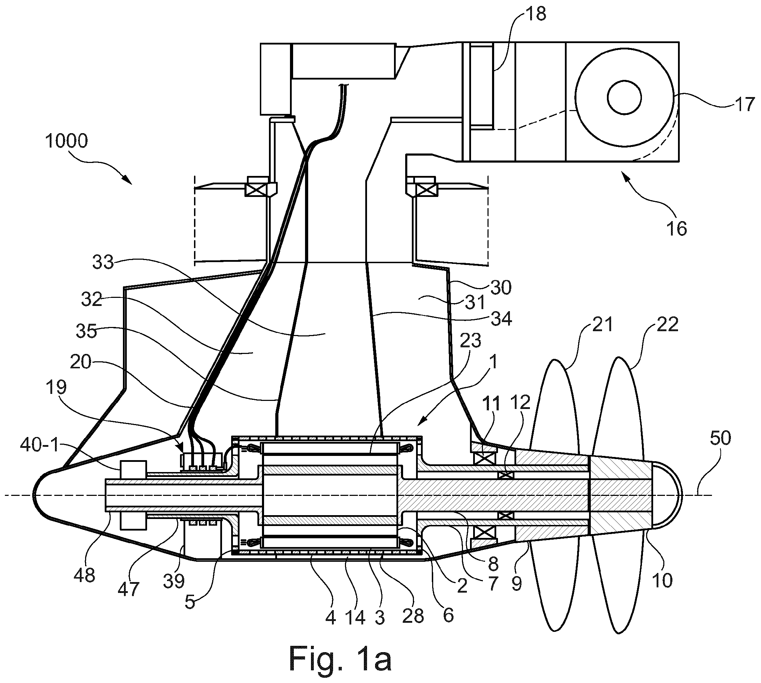

FIG 1a schematically illustrates an azimuthing propulsion unit 1000 according to typical embodiments described herein. The azimuthing propulsion unit 1000 of Fig. 1a comprises a dual rotor electric motor 1. The dual rotor electric motor 1 may also be described as contra rotating electric motor. The dual rotor electric motor 1 is typically arranged substantially horizontally centrally within the azimuthing propulsion unit 1000.Particularly, the dual rotor electric motor 1 is arranged within a pod of the azimuthing propulsion unit 1000.

The dual rotor electric motor 1 comprises an inner rotor 2 and an outer rotor 3. The inner rotor 2 is arranged within the outer rotor 3. Inner rotor 2 and outer rotor 3 are arranged coaxially with respect to each other. The inner rotor 2 and the outer rotor 3 are configured to rotate about a rotation axis 50. The rotation axis 50 is a longitudinal axis of the azimuthing propulsion unit 1000. The inner rotor 2 drives an inner shaft propeller 10 and the outer rotor 3 drives an outer shaft propeller 9. The outer shaft propeller 9 and the inner shaft propeller 10 are arranged coaxially and rotate about the rotation axis 50. The outer shaft propeller 9 and the inner shaft propeller 10 form a contra rotating propeller unit. In the embodiment of Fig. 1a, the outer shaft propeller 9 and the inner shaft propeller 10 substantially have the same diameter. In embodiments not shown in Fig. 1a the outer shaft propeller 9 may have a diameter different from the diameter of the inner shaft propeller 10. Exemplarily, the outer shaft propeller 9 may have a diameter of at least 6 m, and the inner shaft propeller 10 may have a diameter of at most 6 m.

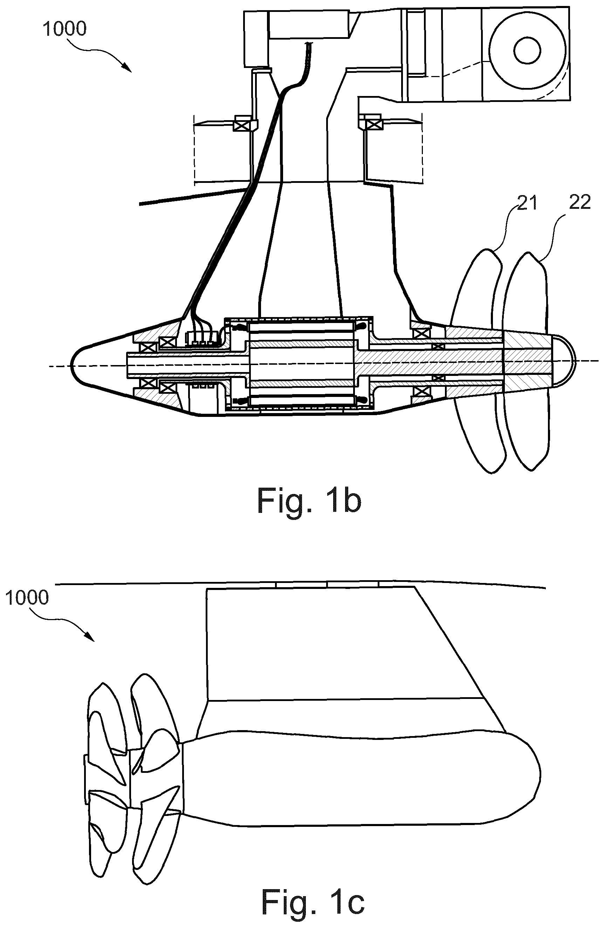

The outer rotor 3 of the dual rotor electric motor 1 typically comprises a perforated tube 4, as shown in the typical embodiment of Fig. 1. The perforated tube 4 mechanically supports the outer rotor winding and comprises a plurality of openings. The plurality of openings of the perforated tube 4 are configured to pass air from an exterior of the dual rotor electric motor 1 into an interior of the dual rotor electric motor 1, and vice versa. Warm air, particularly heated by the dual rotor electric motor 1, may pass from an air gap 23 between the inner rotor 2 and the outer rotor 3 through the perforated tube to an annular air channel 14.

The perforated tube 4 transmits a torque of the outer rotor 3 to outer rotor end flanges 5, 6. A non-drive end, NDE, outer rotor end flange 5 connects the perforated tube 4 to an NDE outer shaft 47. A drive end, DE, outer rotor end flange 6 connects the perforated tube 4 to a DE outer shaft 7. The DE outer shaft 7 transmits the torque of the outer rotor 3 to the outer shaft propeller 9. The outer shaft propeller 9 comprises a plurality of first blades 21, of which two are visible in Fig. 1. The inner rotor 2 is connected to an NDE inner shaft 48 and to a DE inner shaft 8. The DE inner 8 shaft transmits the torque of the inner rotor 2 to the inner shaft propeller 10. The inner shaft propeller 10 comprises a plurality of second blades 22, of which two are visible in Fig. 1a. In the embodiment of Fig. 1a, the outer shaft propeller 9 and the inner shaft propeller 10 are arranged in a pulling configuration. In particular, the first blades 21 and the second blades 22 are configured to operate in a pulling mode.

The NDE inner shaft 48 (also denoted as first shaft herein) and the NDE outer shaft 47 (also denoted as second shaft herein) are supported by a bearing unit 40-1. In some embodiments, the bearings for the NDE inner shaft and for the NDE outer shaft can be configured so that the axial (and, eventually, radial bearings) for both shafts may be fitted into the same bearing housing. Typically, the bearing unit 40-1 typically comprises an oil seal, respectively.

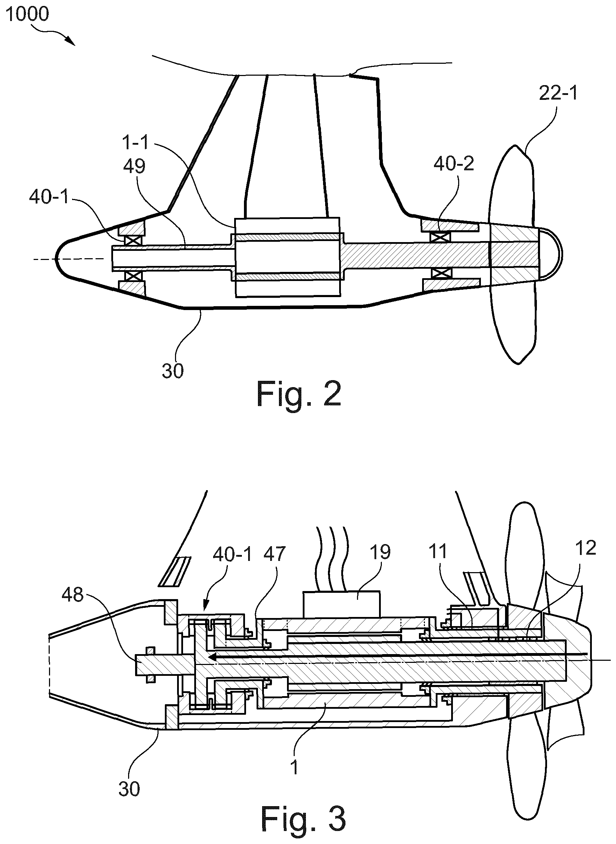

The DE outer shaft 7 is supported in the pod 30 by a DE outer bearing 11. The DE inner shaft 7 is supported in the DE outer shaft 8 by a DE inner bearing 12. The DE outer bearing 11 and the DE inner bearing 12 typically comprise an oil and water seal, respectively. Typically, the DE outer bearing 11 and the DE inner bearing 12 may be arranged in a bearing unit 40-2 according to embodiments described herein (which can exemplarily be seen in Fig. 2). According to some embodiments, the properties and features described herein with respect to NDE bearing unit 40-1 may also be used and applied to DE bearing unit 40-2, where applicable.

The dual rotor electric motor 1 is provided with electric energy via a slip ring unit 19. The slip ring unit 19 is typically arranged on the non-drive end side of the dual rotor electric motor 1 and particularly to contact the NDE outer shaft 47 as shown in Fig. 1. The NDE outer shaft 47 and the NDE outer rotor end flange 5 are configured to electrically connect the slip ring unit 19 to the dual rotor electric motor 1. The slip ring unit 19 comprises at least one sliding contact to transmit electricity from power supply cables 20 to the dual rotor electric motor 1 and particularly to the outer rotor 3 of the dual rotor electric motor 1. From the outer rotor 3, electricity is provided to windings of the dual rotor electric motor 1. The power supply cables 20 provide electrical power from a marine vessel, and particular from a power supply of the marine vessel to the dual rotor electric motor 1 via the slip ring unit 19. The slip ring unit 19 comprises a slip ring unit housing 39. The slip ring unit housing 39 separates the slip ring unit 19 from a further interior of the pod 30 and particularly is configured to prevent dust generated inside the slip ring unit 19, particularly generated by the at least one sliding contact of the slip ring unit 19, to escape to the interior of the pod 30.

Inside the pod 30 of the azimuthing propulsion unit 1000, air is circulated. The azimuthing propulsion unit 1000 comprises a cooling air unit 16. In the embodiment of Fig. 1, the cooling air unit 16 is arranged within a hull of a marine vessel. In the typical embodiment shown in Fig. 1a, the cooling air unit 16 comprises an air fan 17 to circulate air. The cooling air unit 16 typically comprises a heat exchanger 18. By the heat exchanger 18, warm air entering the heat exchanger 18 from the pod 30 is cooled with heat being at least partially transferred to a cooling agent of the heat exchanger 18. The cooling air unit 16 provides cool air to the dual rotor electric motor 1 via a DE ingoing air channel 31 and an NDE ingoing air channel 32 in the pod 30. The DE ingoing air channel 31 is physically separated from an outgoing air channel 33 by an DE air channel separating wall 34 in Fig. 1a. The NDE ingoing air channel 32 is physically separated from the outgoing air channel 33 by an NDE air channel separating wall 35 in Fig. 1a. Typically, the outgoing air channel 33 substantially extends in the center of the pod 30 and particularly along a vertical central axis of the pod 30. Air passing through the DE ingoing air channel 31 and/or the NDE ingoing air channel 32 passes through openings of the perforated tube 4 and/or the outer rotor end flanges 5, 6 into an interior of the dual rotor electric motor 1. Within the dual rotor electric motor 1, the air may be heated by the dual rotor electric motor 1, in particular when in operation. The air may exit the dual rotor electric motor 1 via openings of the perforated tube 4 towards the annular air channel 14. The annular air channel 14 is connected to the outgoing air channel 33.

In Fig. 1b, the azimuthing propulsion unit 1000 is configured to operate in a pushing mode. In particular, the first blades 21 and the second blades 22 are configured to operate in a pushing mode. In Fig. 1c, a side view of the azimuthing propulsion unit 1000 of the embodiment of Fig. 1b is schematically shown.

Fig. 2 shows a schematic view of an azimuthing propulsion unit 1000 having a single shaft 49 in the shaft arrangement according to embodiments described herein. The azimuthing propulsion unit 1000 includes a pod 30 and a pod hull and a motor 1-1, which may typically be an electric motor. The azimuthing propulsion unit 1000 shows a propeller unit having one propeller 22-1 being driven by the shaft at the DE side of the azimuthing propulsion unit. The shaft driving the propeller 22-1 is supported at the DE side by an insulating bearing unit 40-2. Additionally, or alternatively, the shaft 49 is supported by an insulating bearing unit 40-1 at the NDE side of the azimuthing propulsion unit 1000. According to some embodiments, the insulating bearing unit 40-1 at the NDE side and the insulating bearing unit 40-2 at the DE side may be bearing units as described in embodiments herein. For instance, the bearing unit 40-1 and/or the bearing unit 40-2 may include at least one bearing (such as an axial and/or a radial bearing). In some embodiments, the insulating bearing unit 40-1 and/or 40-2 may include a bearing housing for housing the at least one bearing of the bearing unit. Typically, the insulating bearing unit 40-1 and/or 40-2 provides an electrical separation between the shaft 49, the hull 30, and/or the bearing housing.

Fig. 3 shows an azimuthing propulsion unit having a shaft arrangement with two shafts according to embodiments described herein. In particular, the azimuthing propulsion unit 1000 includes a first shaft 48 (also denoted as inner shaft herein) and a second shaft 47 (also denoted as outer shaft herein). The inner shaft 48 runs at least partially within the outer shaft 47. Both shafts 47, 48, are typically driven by the motor 1, which may be an electric motor, and especially a contra rotating dual rotor electric motor. Fig. 3 shows a DE outer bearing 11 and a DE inner bearing 12 for supporting the shafts 47, 48 at the DE side of the azimuthing propulsion unit. At the NDE side, an insulating bearing unit 40-1 according to embodiments can be seen, which may include a bearing housing and at least one bearing in the bearing housing. Typically, the at least one bearing of the insulating bearing unit exemplarily shown in Fig. 3 electrically separates (or insulates) the two shafts 47, 48 with respect to each other, and/or one of the shafts with respect to the bearing housing (or a bearing housing wall).

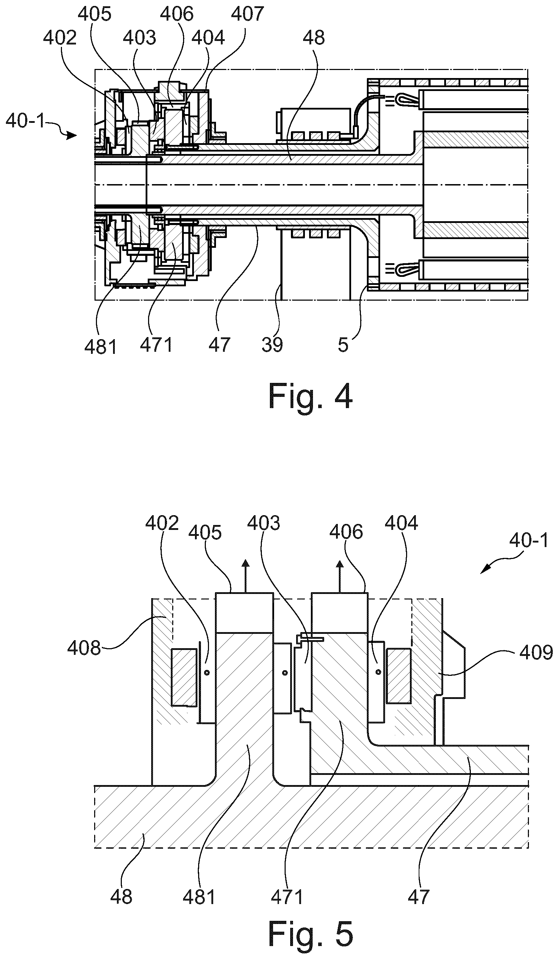

Fig. 4 shows a partial view of an azimuthing propulsion unit and, especially, the NDE side according to some embodiments described herein. In Fig. 4, the insulating bearing unit 40-1 is shown including bearings 402 to 406 and a bearing housing 407 housing the bearings 402 to 406. The bearings 402 to 406 are adapted for supporting both the inner shaft 48 (or first shaft) and the outer shaft 47 (or second shaft). According to some embodiments, the bearings 402, 403, and 404 are axial bearings for the inner shaft 48 and the outer shaft 47; and the bearings 405 and 406 are radial bearings for the inner shaft 48 and the outer shaft 47. Typically, the outer shaft 47 may include a flange 471, especially at the end of the outer shaft 47. In some embodiments, the outer shaft 47 may have a substantially L-like shape for providing the flange 471 at the end of the outer shaft 47. According to some embodiments, the inner shaft 48 may include a flange 481 extending from the rest of the inner shaft 48 (wherein the rest of the shaft especially runs substantially parallel to the rotation axis 50). In some embodiments, the flange 471 of the outer shaft 47 and/or the flange 481 of the inner shaft 48 may be integrally formed with the rest of the respective shaft. Alternatively, or additionally, the flange 471 and/or the flange 481 may be connected to the rest of the respective outer shaft, e.g. by screws, bolts, mortise joints, some kind of tongue and groove arrangement, or the like.

According to some embodiments, the flanges 471 and 481 may be arranged and configured with respect to each other for enabling the montage of two shafts and/or for enabling the montage of the common axial bearing at one of the flanges, e.g. by one flange extending the other flange slightly in radial direction.

Typically, the insulating bearing unit 40-1 is adapted and configured for supporting the flange 471 of the outer shaft 47 and the flange 481 of the inner shaft 48.

According to some embodiments, an insulating bearing unit as described herein may be understood as a unit, which is able to combine the functions of a bearing and an electrical insulation device, especially by preventing circulating currents within the azimuthing propulsion unit. In some embodiments, the insulating bearing unit may be denoted as an electrical insulating bearing unit. Typically, the insulating bearing unit as referred to herein may have electrically insulating properties, e.g. by including or providing an insulation material. Especially, the (electrical) insulating bearing unit (or the bearing of it) may be electrically insulating itself by insulating properties, and, especially, the chosen material. According to some embodiments, the insulating properties may be achieved by material properties of the electrical insulating bearing unit, such as kind of material, thickness of material, location of material, the way of arrangement of the material (e.g. in layers, spread throughout the material, in block shape, or the like).

According to some embodiments described herein, an electrical separation between two elements may be understood in that the two elements are electrically insulated with respect to each other, at least partially.

Typically, the insulating bearing unit as described in embodiments herein provides an electrical separation between at least two elements of the following: the first shaft (or inner shaft) of the shaft arrangement, the second shaft (or outer shaft, if present in the azimuthing propulsion unit) of the shaft arrangement, the hull, and the bearing housing (if present in the azimuthing propulsion unit). In some embodiment, the insulating bearing unit may be described as being configured to insulate the first shaft and second shaft from each other and, additionally or alternatively, to insulate the first shaft (or the second shaft, if present) from the pod hull to prevent bearing currents through the bearings of the azimuthing propulsion unit.

According to some embodiments described herein, the bearing housing 407 may have bearing housing walls 408, 409, and 410 can exemplarily be seen in Fig. 4. Typically, the bearing housing walls 408 and 410 extend substantially perpendicular to the rotation axis of the inner shaft and the outer shaft, and bearing housing wall 410 extends (at least partly) substantially parallel to the rotation axis of the inner shaft and the outer shaft. In some embodiments, bearing housing wall 410 extending substantially parallel to the rotation axis may be denoted as a kind of ceiling of the bearing housing.

In some embodiments described herein, a bearing housing as referred to herein may be understood as an element housing at least one bearing and the parts to be supported by the bearing. In one example, the bearing housing may for instance house the flange 481 of the inner shaft and the shaft 471 of the outer shaft 47 at least partially and at least one (axial) bearing between the shafts. According to some embodiments, the bearing housing may be a separate housing within the hull of the pod of the azimuthing propulsion unit. In some embodiments, the bearing housing may (at least partially) be integrally formed in the hull of the pod of the azimuthing propulsion unit. For instance, one or more walls of the bearing housing may be provided by the hull of the pod of the azimuthing propulsion unit. In some embodiments, the bearing housing being at least partially integrated into the hull of the pod may provide access to the bearing unit within the bearing housing e.g. by removing one of the walls of the bearing housing. In some embodiments, which may be combined with other embodiments described herein, the bearing housing may provide a split design. For instance, the bearing housing may consist of two halves fixed (e.g. bolted) together.

Fig. 5 shows a schematic view of the insulating bearing unit 40-1 according to some embodiments described herein. The insulating bearing unit 40-1 includes a first axial bearing 403 between the inner shaft 48 and the outer shaft 47 (or between the flange 481 of the inner shaft 48 and the flange 471 of the outer shaft 47). In the embodiment exemplarily shown in Fig. 5, the insulating bearing unit 401 further includes a second axial bearing 402 arranged between a first bearing housing wall 408 and the inner shaft 48 (or the flange 481 of the inner shaft), and a third axial bearing 404 arranged between a second bearing housing wall 409 and the outer shaft 47 (or the flange 471 of the outer shaft). Typically, the first bearing housing wall 408 and the second bearing housing wall 409 may extend substantially perpendicular to the axis of rotation 50 of the inner shaft 48 and the outer shaft 47. The insulating bearing unit 401 shown in Fig. 5 may further include a radial bearing 405 for the inner shaft 48 and a radial bearing 406 for the outer shaft 47.

According to embodiments described herein, the insulating bearing unit 401 is configured for allowing a transfer of axial forces between the outer shaft 47 and the inner shaft 48 (or, particularly, the flange 471 of the outer shaft 47 and the flange 481 of the inner shaft 48). For instance, a first axial bearing 403 is provided between the inner shaft and the outer shaft for enabling a transfer of the axial forces between the shafts.

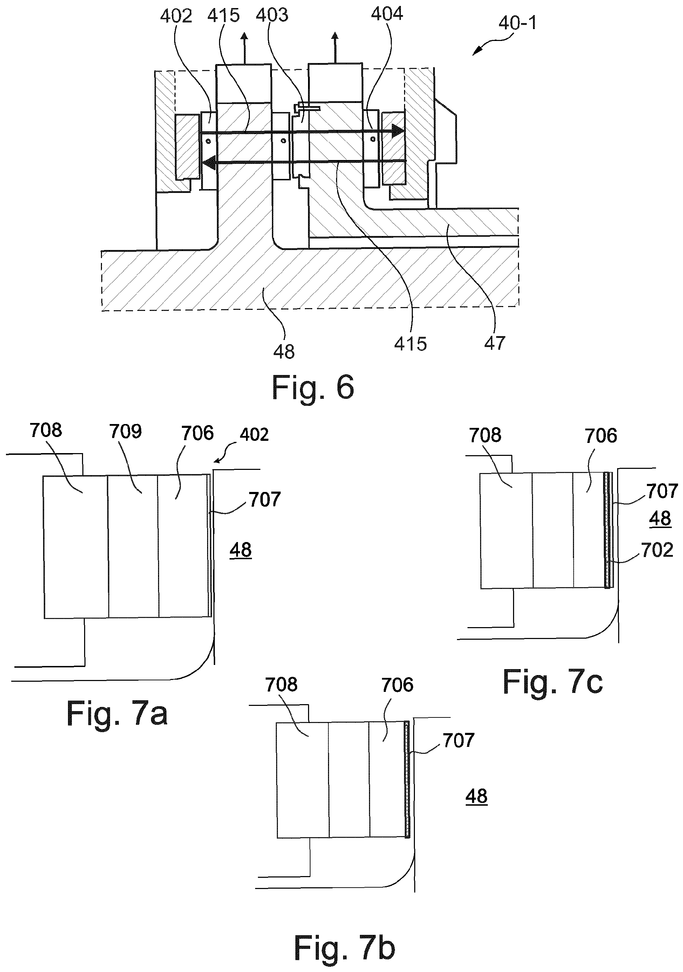

Fig. 6 shows the situation of a transfer of axial forces between the flange 481 of the inner shaft and the flange 471 of the outer shaft by arrows 415. The arrows 415 of Fig. 6 show a transfer of axial forces between the shafts in both directions. According to some embodiments, a transfer of axial forces between the two shafts may be beneficial for the stability of the drive chain of the azimuthing propulsion unit. The axial load of the two shafts may be described as being bundled or merged when using a bearing unit as described in embodiments described herein, and the insulating bearing unit allows for a combined axial load sharing. Typically, a combined axial load sharing enables the distribution of the load, especially the weakening of load peaks. The distributed load may relieve the single shafts and may prevent damage on one of the shafts. Typically, the inner shaft and the outer shaft and the insulating bearing unit as described in embodiments herein, are arranged within the bearing housing for a combined axial load sharing.

Typically, for enabling a transfer of axial forces between two shafts in an azimuthing propulsion unit, the location and the distance of the inner shaft to the outer shaft may be considered (and, especially, the location and the distance between the flange 471 of the outer shaft and the flange 481 of the inner shaft). Typically, the inner shaft and the outer shaft are positioned dependent on each other in axial direction, in particular by the first axial bearing. Typically, the inner shaft and the outer shaft share one axial bearing, namely the first axial bearing 403. In some embodiments, the inner shaft and the outer shaft share one axial bearing for enabling the transfer of axial forces (and, especially, for realizing the combined axial load sharing). Typically, the insulating bearing unit (in particular the first axial bearing 403) provides support for the combined axial load sharing of the inner shaft and the outer shaft.

According to some embodiments described herein, the arrangement of the inner shaft and the outer shaft with respect to each other and the arrangement of the first axial bearing allows for a space saving arrangement of the shafts as well as a space saving arrangement of the insulating bearing unit. The compact design of the insulating bearing unit and the positioning of the shafts to each other for a space saving arrangement further allows the insulating bearing unit to be easily maintained.

According to some embodiments, the bearings as described herein, may be pad bearings, but may also be rolling bearing, or plain bearings, or any combination of the different bearing types for the different bearing locations. In embodiments described herein, the bearings of the insulating bearing unit may be chosen as useful or appropriate for the application case. In some examples, the radial bearings of the insulating bearing unit according to some embodiments described herein may be rolling bearings, while the axial bearings (or at least one of them) may be (a) pad bearing(s). In some embodiments, which may be combined with other embodiments described herein, some components of the axial bearing may be partitioned (e.g. in replaceable sectors) for facilitating a removal of the axial bearing out of the bearing housing. Typically, the top (at one or both sides) of the pad bearing may be a slide bearing. According to some embodiments, a pad bearing may be composed of multiple pads (such as two or more pads), or pad layers. According to some embodiments, a pad bearing as described herein may be designed as useful or suitable for the application in the insulating bearing unit according to embodiments described herein. For instance, a pad bearing may include sector pieces, may be substantially round shaped, may include a slide bearing housing, a bearing ring, a slide guide, sliding segments, segment carrier and the like, and/or may be equipped with spring elements.

According to some embodiments, the axial bearing(s), being for instance bearing pads, and especially the first axial bearing 403, may be mounted to the inner shaft or the outer shaft by a fixation means. In some embodiments, the axial bearing(s), especially first bearing 403, is mounted and configured in a non-rotating way. For instance, the axial bearing(s), especially the first bearing 403, may be fastened to the bearing housing. Typically, the axial bearing(s) may be fastened to a shaft by a bolt connection, a screw connection, a form-fit connection (such as a fishtail connection), and the like.

Typically, the design of the axial bearing, the radial bearings, the fixation means for the at least one axial bearing and/or the radial bearings, the arrangement of the bearings within the housing, the housing geometry, the arrangement of the flanges of the inner shaft and the outer shaft may be arranged so as to enable a maintenance person to lift up the axial bearing and/or the radial bearing in the case of maintenance, repair, or replacement. For instance, the insulating bearing unit and the bearing housing may be designed so that substantially no barrier (or at least only a removable barrier) is present when lifting an axial bearing out of the housing. Especially, the maintenance of axial bearings as well as radial bearings may be done from inside the pod without dry-docking of the ship.

According to embodiments described herein, the insulating bearing unit as referred to herein is an insulating bearing unit for an azimuthing propulsion unit. According to some embodiments, the bearing unit may be adapted or configured for an azimuthing propulsion unit by choosing for instance the size, the material, the strength, the type, the location, the arrangement, the shape and further properties for the use in an azimuthing propulsion unit. For instance, the size of the bearing unit may be adapted to the above listed application fields of the azimuthing propulsion unit in a ship. In another example, the material and/or the strength may be chosen according to the expected load appearing in an azimuthing propulsion unit having e.g. the above-named examples of propeller power, and so on. In some embodiments, the housing of the bearing unit may be adapted to be mounted in a pod of an azimuthing propulsion unit. The housing may for instance be adapted by configuring the size, the shape, the mounting features, the seals, and the like for the use in a pod of an azimuthing propulsion unit. In some embodiments, which may be combined with other embodiments described herein, the bearing unit may be adapted for an azimuthing propulsion unit by choosing the properties of the bearings of the insulating bearing unit for the shafts of an azimuthing propulsion unit (e.g. regarding size, strength and the like). Typically, the bearing unit may be adapted for the montage in a pod of an azimuthing propulsion unit (e.g. by respective fixation means, montage features, fulfilled shape requirements, and the like) and may especially be configured for a better maintenance and repair possibilities, e.g. by hatches in the bearing housing or the like.

Figs. 7a to 7f show embodiments for realizing the effect of electrical separation (or the electrical insulation effect) of the insulating bearing unit according to embodiments described herein. In Figs. 7a to 7f, the shown bearing of the insulating bearing unit is exemplarily an axial bearing. Typically, the bearings shown in Figs. 7a to 7f are exemplarily shown as the second bearing 402, which is an axial bearing between a bearing housing wall 408 and the inner shaft 48 (or its flange 481, respectively). However, the features described with respect to Figs. 7a to 7f may also be applied to other bearings of the insulating bearing unit as described herein, such as other axial bearings (e.g. axial bearings between the two shafts, and/or axial bearings between another wall of the bearing housing and a shaft), radial bearings (e.g. radial bearings 405, 406 of the insulating bearing unit for the first shaft and the second shaft, radial bearings 11 and 12 at the DE side, and/or a radial bearing between a shaft and the pod hull at the DE side), and/or any combination thereof.

The axial bearing exemplarily shown in Figs. 7a to 7f show a first housing part 706 of the axial bearing 402, a second housing part 708 of the axial bearing 402, misalignment compensation mechanism 709 (handling especially angular misalignments between parts and may for instance be a disk spring, or a spherical surface joint or the like), and a slide bearing layer 707. Typically, the second housing part 708 may also be denoted as a thrust pad. Not all reference signs are shown in all embodiments of Figs. 7a to 7f for the sake of a better overview. In the embodiment shown in Fig. 7a, the insulation material may be arranged within the axial bearing 402, or at least in parts of the axial bearing 402, such as the first housing part 706. Typically, the axial bearing shown in Fig. 7a is made of an insulation material, i.e. a material, which is (at last partially) made from electrically insulating material.

Fig. 7b shows an embodiment, in which the insulation effect of the insulating bearing unit is achieved by including material with electrically insulating properties into the slide bearing layer 707, e.g. by providing a layer of electrically insulating material 701, or by designing the slide bearing layer 707 as being electrically insulating. In some embodiments, the slide bearing layer 707 of the bearing shown in Fig. 7b may be made of an electrically insulating material 701.

Typically, the slide bearing layer 707 of the bearing of the insulating bearing unit according to embodiments described herein is made of one or more materials allowing contact of the bearing with a rotating element, such as materials being durable, having low friction, low wear, being resistant to elevated temperatures, and/or being corrosion resistant. In some embodiments, the slide bearing layer of a bearing of an insulating bearing unit as described herein may include materials like plastic, especially PTFE based plastic, and/or PEEK based plastic.

Fig. 7c shows an embodiment, where a layer of electrically insulating material is provided adjacent to the slide bearing layer 707. For instance, a layer of electrically insulating material 702 may be provided directly adjacent to the slide bearing layer 707, or a layer of electrically insulating material may be provided in a distance to the slide bearing layer 707. In some embodiments, a layer of electrically insulating material 702 is provided under the slide bearing layer 707 in Fig. 7c. The term "under" in this context may be understood in a direction from the surface of the bearing to the bearing pads.

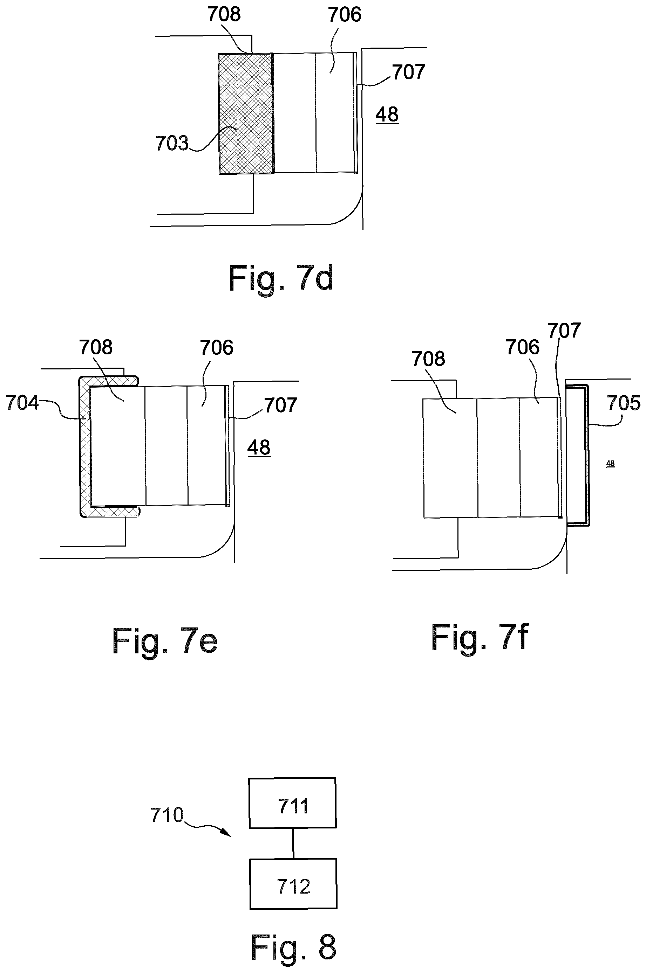

Fig. 7d shows an embodiment of the bearing of the insulating bearing unit, where the insulation material is provided as part of thrust pad 708. For instance, electrically isolating material 703 may be spread in the material of the thrust pad, the thrust pad may include one or more layers of electrically isolating material, the thrust pad may substantially be made from electrically insulating material or the like.

According to some embodiments, the insulating bearing unit may provide the effect of electrical separation by an insulation element being outside of the at least one bearing. Fig. 7e shows an example of providing insulation material for the insulating bearing unit outside of the bearing. In Fig 7e, the electrically insulation material 704 is provided in the bearing housing side, especially the bearing housing wall 408 for achieving an electrical separation between the shaft and the bearing housing according to some embodiments described herein. For instance, the electrically insulating material 704 may be provided as a layer within the bearing housing wall, e.g. at a side facing the bearing 402. In another example, the bearing housing wall may have a defined concentration of electrically insulation material at the side facing the bearing. According to some embodiments, and as can be seen in Fig. 7e, the insulating material 704 may at least partially surround the bearing, such as the thrust pad 408. For instance, the insulation material 704 may extend to a certain degree over or around the bearing.

Fig. 7f shows an embodiment, where the insulation material 705 is provided in the shaft, especially the inner shaft 48. For instance, the electrically insulating material 705 may be provided as a layer within the shaft, e.g. at a side facing the bearing 402. In another example, the shaft may have a defined concentration of electrically insulation material at the side facing the bearing. In some embodiments, the electrically insulating material may be provided in the shaft in a defined area, especially an area facing the bearing and/or an area having a size, which substantially corresponds to the bearing size. For instance, the electrically insulating material may be provided in the shaft as a substantially round shaped circumferential insulating ring part in or on the shaft. For instance, the shaft may be formed with, or may have attached a substantially round shaped ring of electrically isolating material.

A property being denoted with "substantially" herein may be understood as the property including small or minor deviations. For instance, the term "substantially round shaped" may be understood that the round shape may have deviations from the strict round shape, such as deviations of up to 15% of the radius. In another example, a "substantially L-like shape" may look like an "L" but may include deviations from the rectangular angles in an "L" of about typically 15%, more typically of about 10%, and even more typically of about 5%. The same may be valid for expressions like "substantially parallel", "substantially perpendicular", and the like.

According to some embodiments, which may be combined with other embodiments described herein, the electrical separation or insulation or the electrically isolating properties provided by the insulating bearing unit may be configured to withstands currents of typically up to 50 A, more typically up to 40 A and even more typically up to 30 A. In some embodiments, the currents appearing with the insulating bearing unit as described herein may typically be below 1A. Typically, an insulation material may be chosen, which is able to withstand the currents appearing between elements of the azimuthing propulsion unit listed above. For instance, the insulation material may have an insulation resistance of typically between about 100MOhm to about 1000MOhm, and an impedance for insulative properties of between about 200 Ohm to about 1000 Ohm, typically between about 500 Ohm to about 1000 Ohm, typically at a frequency of about 100kHz.

In some embodiments described herein, the insulation material (as for instance used in the embodiments of Figs. 7a to 7f) may include plastic materials such as PTFE based plastic, and/or PEEK based plastics. Typically, ceramics and/or reinforced epoxy materials, such as epoxy laminates may be used in structural parts as insulation material.

According to some embodiments described herein, a method for electrically separating elements of an azimuthing propulsion unit is provided. A flow chart of the method 710 in shown in Fig. 8. The azimuthing propulsion unit includes a shaft arrangement with at least one shaft, an insulating bearing unit for supporting the at least one shaft at least partially and including at least one bearing, optionally a bearing housing for housing the insulating bearing unit, a motor for driving the at least one shaft, a marine propeller unit including at least one propeller driven by the at least one shaft, a pod for housing the motor and at least a part of the shaft arrangement, a hull of the pod, wherein the shaft arrangement comprises a first shaft and, optionally, a second shaft. According to some embodiments, which may be combined with other embodiments described herein, the azimuthing propulsion unit used in the method described herein may be an azimuthing propulsion unit as described in embodiments herein. For instance, the bearing unit may be a bearing unit as described with respect to Figs. 4 to 7. In some examples, the azimuthing propulsion unit may be an azimuthing propulsion unit as exemplarily described in Figs. 1a to 1c, or 2.

Typically, the method 710 includes in box 711 arranging the insulating bearing unit between two elements of the azimuthing propulsion unit. In some embodiments, these elements may be a first shaft and a second shaft, a first shaft and a bearing housing, a second shaft and a bearing housing, a shaft and the pod hull, and the like. In box 712, the method further includes electrically separating elements of the azimuthing propulsion unit with respect to each other. Typically, the elements are for instance two of the following: the first shaft, the second shaft, the hull of the pod, and the bearing housing.

According to some embodiments, the method described herein may also be described as a method for electrically insulating shaftline elements of an azimuthing propulsion unit. For instance, the insulating bearing unit according to embodiments described herein may stand in contact with a shaft of the azimuthing propulsion unit, such as the first shaft, the second shaft, or both. In some embodiments, the insulating bearing unit may be configured for electrically insulating the one or more shafts of the azimuthing propulsion unit, which it stands in contact with.

According to some embodiments, the insulating bearing unit used in the method described herein may include one or more axial bearings 402, 403, 404 for the inner shaft 48 (or first shaft) and the outer shaft 47 (or second shaft). In some embodiments, the insulating bearing unit may include one or more radial bearings 405, 406 for the inner shaft 48 and the outer shaft 47. Typically, the axial and/or radial bearings may include one or more pad bearings as described in embodiments above. According to some embodiments, providing an insulating bearing unit in a bearing housing may include providing support for the bearings in the bearing housing, such as a fixture, a receptacle, an area foreseen (and maybe preprocessed) for the bearing of the bearing unit to rest, and the like. Especially, bearing housing walls 408 and 409 may be adapted and/or prepared for providing a contact area for the axial bearings of the insulating bearing unit.

According to some embodiments, which may be combined with other embodiments described herein, the method includes arranging the insulating bearing unit between the first shaft and the second shaft, wherein the first shaft runs at least partially within the second shaft, and wherein especially the first shaft and the second shaft are arranged in a counter-rotating manner, as exemplarily shown in Figs. 1a, 1b, and 1c.

According to embodiments described herein, the azimuthing propulsion unit including an insulating bearing unit and the method for electrically separating elements of an azimuthing propulsion unit as described herein allow for combining different functions within the azimuthing propulsion unit in a space-saving, compact and reliable way. In particular, the insulating bearing unit providing both bearing properties and insulation properties increases safety in the azimuthing propulsion unit. Typically, the azimuthing propulsion unit and the method according to embodiments described herein may prevent circulating currents. According to some embodiments, the insulating bearing unit is easy to assembly and disassembly, thereby sparing time and costs due to repair, maintenance and/or replacement. The operation of the azimuthing propulsion unit becomes safer, more reliable, and less cost-intensive with the azimuthing propulsion unit and the method according to embodiments described herein.

This written description uses examples to describe the subject matter herein, including the best mode, and also to enable any person skilled in the art to make and use the subject matter. The patentable scope of the subject matter is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

### Reference number list

- 1000: azimuthing propulsion unit
- 1: dual rotor electric motor
- 1-1: single shaft electric motor
- 2: Inner rotor
- 3: Outer rotor
- 4: Perforated tube
- 5: NDE outer rotor end flange
- 6: DE outer rotor end flange
- 7: DE outer shaft
- 8: DE inner shaft
- 9: Outer shaft propeller
- 10: Inner shaft propeller
- 11: DE outer bearing
- 12: DE inner bearing
- 14: Annular air channel
- 16: Cooling air unit
- 17: Air fan
- 18: Heat exchanger
- 19: Slip ring unit
- 20: power supply cables
- 21: first blades
- 22: second blades
- 22-1: single shaft propeller
- 23: Air gap
- 30: Pod
- 31: DE Ingoing air channel
- 32: NDE Ingoing air channel
- 33: Outgoing air channel
- 34: DE Air channel separating wall
- 35: NDE Air channel separating wall
- 39: Slip ring housing
- 40-1: NDE single shaft bearing
- 40-2: DE single shaft bearing
- 47: NDE outer shaft
- 48: NDE inner shaft
- 49: Single shaft
- 50: Rotation axis
- 401: Insulating bearing unit
- 402-404: Axial bearings
- 405-406: Radial bearings
- 407: Bearing housing
- 408-410: Bearing housing walls
- 701-705: Insulation material
- 706: First housing part, thrust pad
- 707: Slide bearing layer
- 708: Second housing part
- 709: Angular Misalignment compensation mechanism
- 710: Method of supporting shafts
- 711; 712: Method steps

## Claims

1. An azimuthing propulsion unit (1000) comprising a shaft arrangement with at least one shaft (47; 48), an insulating bearing unit (40-1; 40-2) for supporting the at least one shaft (47; 48) at least partially, optionally a bearing housing (407) for housing the insulating bearing unit (40-1; 40-2), a motor (1; 1-1) for driving the at least one shaft (7; 8; 47; 48; 49), a marine propeller unit comprising at least one propeller (21; 22) driven by the at least one shaft, a pod (30) for housing the motor (1; 1-1) and at least a part of the shaft arrangement, a hull of the pod (30), wherein the shaft arrangement comprises a first shaft (8; 48) and, optionally, a second shaft (7; 47), the insulating bearing unit (40-1; 40-2) comprising:
- at least one bearing (402- 406) for the at least one shaft;
- wherein the insulating bearing unit (40-1; 40-2) provides an electrical separation between at least two elements of the following: the first shaft (48) of the shaft arrangement, the second shaft (47) of the shaft arrangement, the pod hull, and the bearing housing (407).

2. The azimuthing propulsion unit according to claim 1, wherein the azimuthing propulsion unit (1000) comprises the first shaft (48) and the second shaft (47), wherein the first shaft (48) runs at least partially within the second shaft (47).

3. The azimuthing propulsion unit according to any of the preceding claims, wherein the first shaft (48) and the second shaft (47) are driven by the motor (1; 1-1), especially a contra rotating dual rotor electric motor.

4. The azimuthing propulsion unit according to any of the preceding claims, wherein the first shaft (48) and the second shaft (47) are arranged in a counter-rotating manner.

5. The azimuthing propulsion unit according to any of the preceding claims, wherein the propeller unit comprises a first propeller (22) coupled to the first shaft (48) and a second propeller (21) coupled to the second shaft (47).

6. The azimuthing propulsion unit according to any of the preceding claims, wherein the first shaft (48) has a first flange (481) and the second shaft (47) has a second flange (471), and wherein the at least one bearing (402-406) of the insulating bearing unit (40-1; 40-2) is located between the first flange (481) and the second flange (471).

7. The azimuthing propulsion unit according to any of the preceding claims, wherein the insulating bearing unit (40-1; 40-2) comprises a first axial bearing (403) between the first shaft (48) and the second shaft (47), a second axial bearing (402) arranged between a bearing housing wall (408) of the bearing housing (407) and the first shaft (48), and a third axial bearing (404) arranged between a bearing housing wall (409) of the bearing housing (407) and the second shaft (47).

8. The azimuthing propulsion unit according to any of the preceding claims, wherein the insulating bearing unit (40-1; 40-2) is configured for allowing a transfer of axial forces between the first shaft (48) and the second shaft (47), and especially, between the bearing housing (407) and the at least one shaft (47; 48); and/or wherein the insulating bearing unit (40-1; 40-2) is configured for allowing a transfer of radial forces between the first shaft (48) or the first flange (481) and the bearing housing (407) and/or for allowing a transfer or radial forces between the second shaft (47) or a second flange (471) and the bearing housing (407).

9. The azimuthing propulsion unit according to any of the preceding claims, wherein the at least one bearing (402-406) is a slide bearing having electrically isolating properties, and wherein the at least one bearing (402-406) especially includes a bearing pad.

10. The azimuthing propulsion unit according to any of the preceding claims, wherein the insulating bearing unit (40-1; 40-2) provides an electrical separation by at least one of: the material of the at least one bearing, and one or more layers of insulating material on or in the at least one bearing.

11. The azimuthing propulsion unit according to any of the preceding claims, wherein the insulating bearing unit (40-1; 40-2) comprises at least one of the following:
- an insulation material within the at least one bearing;
- an insulation layer on the surface of the at least one bearing;
- an insulation layer under the surface of the at least one bearing;
- the at last one bearing being a sliding bearing and comprising an insulation layer under the surface of the at least one bearing;
- a first housing part (706) with a sliding surface and a second housing part (708) being a thrust pad, wherein the insulation material is part of thrust pad;
- an insulation material in or a layer of insulation material on or within a bearing housing wall;
- an insulation material in or a layer of insulation material on the first shaft;
- an insulation material in or a layer of insulation material on the second shaft;
- a substantially round shaped circumferential insulating ring part in or on the first shaft; and,
- a substantially round shaped circumferential insulating ring part in or on the second shaft.

12. The azimuthing propulsion unit according to any of the preceding claims, wherein the azimuthing propulsion unit has a drive end (DE) at the side of the propeller unit and a non-drive end (NDE) at the side of the motor opposite to the propeller unit, and wherein the insulating bearing unit is located at the NDE side.

13. The azimuthing propulsion unit according to any of claims 2 to 12, wherein the insulating bearing unit (40-1; 40-2) is configured to isolate the first shaft (48) and the second shaft (47) from each other and to isolate the first shaft (48) and the second shaft (47) from the hull of the pod (30) to minimize bearing currents running through the bearings of the insulating bearing unit (40-1; 40-2).

14. Method for electrically separating elements of an azimuthing propulsion unit, the azimuthing propulsion unit comprising a shaft arrangement with at least one shaft (7; 8; 47; 48; 49), an insulating bearing unit for supporting the at least one shaft at least partially and comprising at least one bearing, optionally a bearing housing (407) for housing the insulating bearing unit (40-1; 40-2), a motor for driving the at least one shaft (7; 8; 47; 48; 49), a marine propeller unit comprising at least one propeller (21; 22) driven by the at least one shaft (7; 8; 47; 48; 49), a pod (30) for housing the motor (1; 1-1) and at least a part of the shaft arrangement, a hull of the pod (30), wherein the shaft arrangement comprises a first shaft (8; 48) and, optionally, a second shaft (7; 47), the method comprising:
- arranging (711) the insulating bearing unit between two elements of the azimuthing propulsion unit;
- electrically separating (712) elements of the azimuthing propulsion unit with respect to each other by the insulating bearing unit, the elements are at least two elements of the following: the first shaft, the second shaft, the hull of the pod, and the bearing housing.

15. Method according to claim 14, wherein arranging the insulating bearing unit (40-1; 40-2) comprises arranging the insulating bearing unit (40-1; 40-2) between the first shaft (8; 48) and the second shaft (7; 47), wherein the first shaft (8; 48) runs at least partially within the second shaft (7; 47), and wherein especially the first shaft and the second shaft are arranged in a counter-rotating manner.
